# EUROPEAN PATENT APPLICATION

(11) **EP 2 197 169 A1**
(43) Date of publication of application: **16.06.2010**
(21) Application number: 08305899.0
(22) Date of filing: 09.12.2008
(51) Int. Cl.: H04L 29/06

(54) **VoIP registration with multiple call servers**

(71) Applicant: Alcatel Lucent, 75008 Paris (FR)
(72) Inventor: Pote, Parag, 560031, Bangalore (IN)
(74) Representative: Sciaux, Edmond

(57) **Abstract**

A method of supporting Voice over Internet Protocol (VoIP) calls on a network is disclosed. A Voice over Internet Protocol (VoIP) calls on a network, where atleast one VoIP phone in the network registers with a call server present on the network by creating REGISTER packets and forwarding the REGISTER packets to other call servers present on the network through a router. The system for supporting Voice over Internet Protocol (VoIP) calls comprising atleast one router having atleast one server for establishing the call in the network. The call server permits the phone to register with the call server which comprises atleast one means adapted for the router to forward the registration information to other call servers present on the network.

## Description

### BACKGROUND

### Technical Field

The embodiments herein relate to communication systems, and, more particularly, to Voice over Internet Protocol telecommunication (VoIP) networks.

### Description of the Related Art

Voice over Internet Protocol (VoIP) generally refers to a technology using internet as the transmission medium for voice communication where voice data is sent from a phone or a computer in the form of digital packets using Internet Protocol (IP). Generally, in VoIP deployment, call servers are often used to establish calls between source terminals and receiver terminals. Call servers contain information like the IP address of terminals which can be accessed by VoIP. Accordingly, each IP phone terminal must first register with a designated call server.

Normally, to establish a call, the source terminal directly registers with a main call server. It is also possible that a terminal may register with multiple call servers. Therefore, source terminals are often provided with access information of one or more call servers so that any call server can be contacted during a call setup process.

A common requirement in VoIP environment is to support the establishment or maintain the continuity of calls when the main call server becomes unavailable. Some source terminals may not be able to register with more than one call server and, in such a case, if the call server with which the source terminal has registered goes down, the source terminal may not be able to initiate a call or maintain a call, thus creating a situation in which the source terminal itself may be unable to connect to other terminals. Other call servers which can act as backup server for each other to establish or continue the call between the terminals when the main server is unavailable must share the same database registration.

### SUMMARY

In view of the foregoing, an embodiment herein provides a method of supporting Voice over Internet Protocol (VoIP) calls on a network, where atleast one VoIP terminal in a network registers with a call server by sending registration information to the call server through a local router. The local router sends registration information to other call servers in the network. The registration information comprises the address of the VoIP terminal as source address. The VoIP terminal registers with call server using REGISTER command. The other call servers in the network extract information about the VoIP terminal from the registration packets and store the information locally and act as backup servers for the call server.

Embodiments herein further disclose a system for supporting Voice over Internet Protocol (VoIP) calls, comprising atleast one call server and connected to at least one network. The call server permits at least one VoIP phone to register with the call server. The system further comprises at least one means adapted for forwarding registration information to other call servers present on the network. The other call servers comprise atleast one means adapted for extracting information about the VoIP terminal from the registration packets and storing the information locally and at least one means adapted for acting as backup servers for the call server.

These and other aspects of the embodiments herein will be better appreciated and understood when considered in conjunction with the following description and the accompanying drawings.

### BRIEF DESCRIPTION OF THE DRAWINGS

The embodiments herein will be better understood from the following detailed description with reference to the drawings, in which:

FIG. 1 illustrates the block diagram detailing an environment in which various aspects of the invention can be implemented, according to an embodiment herein;

FIG. 2 illustrates the block diagram detailing an router, according to embodiments herein;

FIG. 3 is a flowchart illustrating a method of processing VoIP call set up requests using a plurality of call servers in a communication network, according to an embodiment herein; and

FIG. 4 is a flow chart illustrating a method of a VoIP call registering itself with call servers in a communication network, according to an embodiment herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein

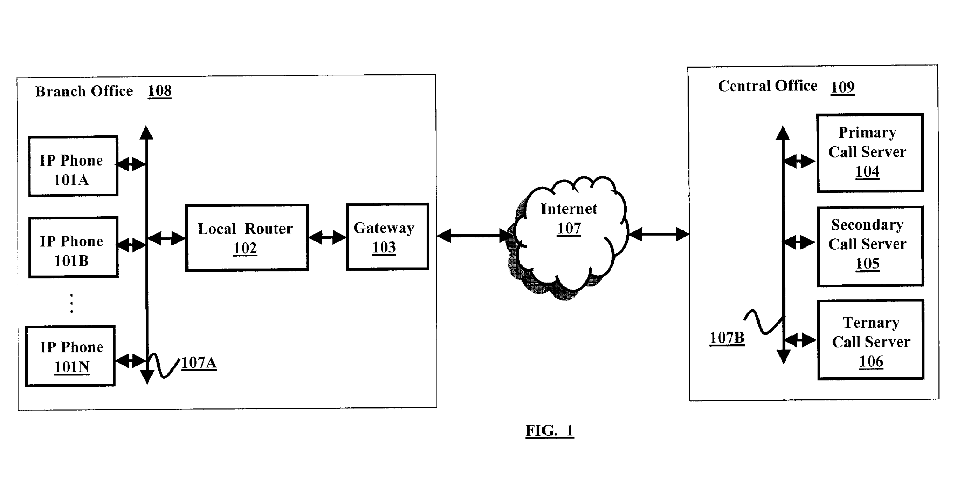

The embodiments herein achieve a method of Voice over Internet Protocol (VoIP) deployment by providing initiation or continuity of the calls when the main call server is unavailable. Referring now to the drawings, and more particularly to FIGS. 1 through 4, where similar reference characters denote corresponding features consistently throughout the figures, there are shown embodiments.

The embodiment herein discloses a method of processing a call setup request in the VoIP environment for providing continued call connectivity when the main server becomes unavailable. An local router device receives REGISTER packets from IP phones destined for the call server present on the network. The router device sends the same REGISTER packets to all the other call servers on the network where the REGISTER packets are stored locally. Once, REGISTER packets are received by the other call servers and a call request is made when the primary call server is unavailable, the other call servers act as backup servers to process the call request from the IP phones.

FIG. 1 illustrates the block diagram detailing an environment in which various aspects of the invention can be implemented, according to an embodiment herein. The diagram illustrates an example environment where the call setup request from the IP phones is processed with other call servers incase of failure of the main call server. A communication network comprises of a Central Office (CO) 109, Branch Office (BO) 108 and Internet 107. The BO 108 comprises of IP phones 101A-101N, LAN 107A, local router 102, and gateway 103, where all components are networked together and connected to the internet 107. The CO 109 comprises of a plurality of call servers such as, primary call server 104, secondary call server 105, ternary call server 106, where all the components are connected to the LAN 107B and the LAN 107B is further connected to the internet 107. The gateway 103 provides connectivity between the systems of CO 109 and BO 108 and also provides connectivity to the internet 107 by sending and receiving digital packet information to and from the sub systems of CO 109 and BO 108. IP phones 101A-101N represent the terminals from where the calls can be initiated by the users to communicate in the VoIP environment. The IP phones 101A-101N process voice signals and send the processed voice signals in the form of digital data packets to the receiving terminals. Each IP phone 101A-101N is configured to access a local router 102 for sending registration information for registering with the call servers and also for sending call setup requests while initiating a call to receiving terminals. The IP phones 101A-101N use specific protocols to establish or initiate a call between terminals. Call servers facilitate calls between the terminals by storing or registering information of the calls made by the users. Suitable protocols may be employed to circulate the registration request sent to the primary call server to the other call servers. All the IP phones 101A-101N may register with the local router 102 using a register command. The register command includes the user information and the parameters like extensions, phone numbers, expiry time, etc. After receiving the REGISTER packets from the phones, the local router 102 forwards the packets to the primary call server 104. The local router 102 further forwards the REGISTER packets to the other call servers including secondary call server 105 and ternary call server 106 where the register information is stored locally. In case of failure or unavailability of the primary call server 104, other call servers which already have the register information of the call setup request from local router 102 may be able to act as stand-by call servers and thereby maintain the continuity of calls.

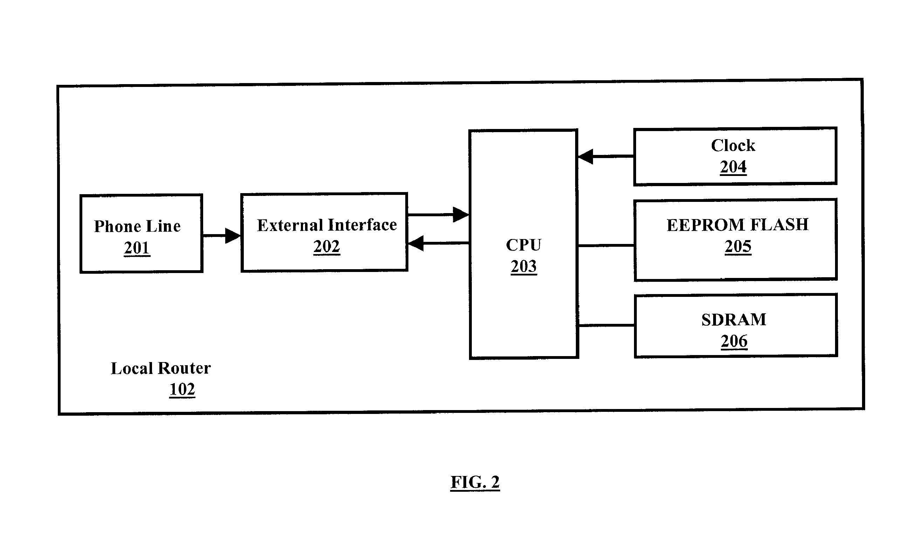

FIG. 2 is a block diagram in detailing a router in a VoIP environment according to an embodiment herein. A router is a computer whose software and hardware are usually tailored to the tasks of routing and forwarding information. Routers generally contain a specialized operating system, for instance, Cisco's IOS or Juniper Networks JUNOS and JUNOSe or Extreme Networks XOS, RAM, NVRAM, flash memory, and one or more processors, as well as two or more network interfaces. The local router 102 forwards data packets to the destinations based on the IP address.

. The local router 102 comprises of a Central Processing Unit (CPU) 203, External Interface 202, phone line 201, clock 204, Electrically Erasable Programmable Read-only Memory (EEPROM) flash 205 and Synchronous Dynamic Random Access Memory (SDRAM) 206. When call setup request is created by IP phones 101A-101N, the phone line 201 receives the signal in analog form. The external interface 202 amplifies and filters the analog signals by creating digital signal in analog-to-digital converter and sends to the CPU 203. CPU 203 fetches the instructions from the EEPROM flash 205 where the routing protocol algorithm is stored. SDRAM 206 is used to store routing tables and can act as a temporary storage for packets in system buffers at the time of processing. The CPU 203 is synchronized with the optimized clock speed to perform all the necessary routing protocols. Once the CPU 203 identifies the packets are from IP phones (101A-101N), the network management setup will forward the registration packets to all the call servers (104, 105, 106). External device, also houses the LAN port and USB port through which the REGISTER packets can be shared with the call servers within the network.

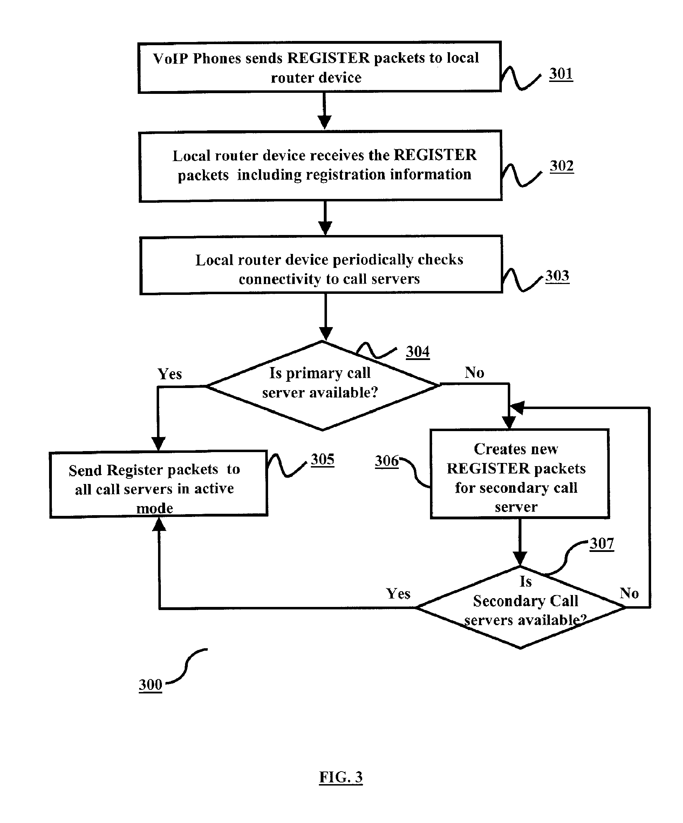

FIG. 3 is a flow chart illustrating the method of processing call setup request using several call servers according to an embodiment herein. One of the VoIP phones 101A-101N acting as a source terminal sends (301) REGISTER packets including user information and parameters such as extensions, phone numbers, expiry time and the like to a local router 102 to register for a call back up service. Session Initiated Protocol (SIP) or any other known protocol may be used to transfer the call to a receiving terminal. The local router device 102 receives (302) packet containing registration request and directs the REGISTER packets to a primary call server 104. The local router 102 provides the communication links between the two sides and periodically checks (303) state of connectivity to call servers with different approaches like pinging, etc. The local router 102 performs a check (304) to find whether the primary call server 104 is available or not for providing call connectivity. If the primary call server 104 is available, then local router 102 sends (305) register packets to all servers 105 which are in active mode and establishes a the call registration with the primary call server 104. If the primary call server is not available, the local router 102 creates (306) new REGISTER packets for secondary call server 105. The local router 102 then performs a check (307) to find if second call server 105 is available. If secondary call server 105 is available, then local router 102 sends (305) register packets to all servers 105 which are in active mode. If secondary call server 105 is not available, the local router 102 creates (306) new packets for the subsequent call servers. Initiated call from the source terminal to the receiving terminal is maintained through any one of the available call servers. Each phone may be configured with the access information for only one of the call servers, thereby simplifying the configuration task and also avoiding the traffic overhead in the network. The various actions in method 300 may be performed in the order presented, in a different order or simultaneously. Further, in some embodiments, some actions listed in FIG. 3 may be omitted.

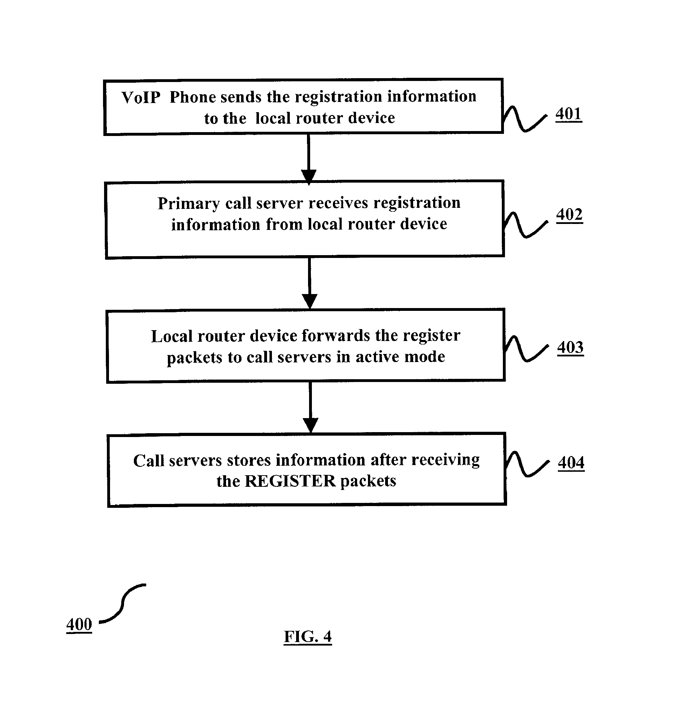

FIG. 4 is a flow chart illustrating a method of a VoIP phone registering itself with the call servers present on the network in a communication network, according to an embodiment herein. A registration request is created by any one of the IP phones 101A-101N and the phones sends (401) the request to local router 102. The request will be in the form of digital data packets containing registration information like user information and parameters like extensions, phone numbers, expiry time, etc and is directed to a primary call server 104. The registration information may be in the form of a REGISTER command. The primary call server 104 receives (402) registration information from the IP phones 101A-101N. The local router 102 obtains registration information from primary call server 104, and forwards (403) the register packets containing the registration information of the phones to all call servers in active mode. The call servers on receiving the registration information from the local router 102 stores (404) the registration information locally. The local router 102 enables VoIP terminals to setup calls between the terminals even when the primary call server 104 is unavailable. The feature can be implemented without any additional configuration changes to the IP phones since the other call servers register the IP phones without requiring a change to the normal registration process. The secondary call server 105 or ternary call server 106, and the like may act as main server when the primary call server 104 is unavailable. The various actions in method 400 may be performed in the order presented, in a different order or simultaneously. Further, in some embodiments, some actions listed in FIG. 4 may be omitted.

The embodiment herein achieves a method of providing call set-up in the VoIP environment and to provide continued connectivity of the calls when the primary call server fails. The local router after receiving REGISTER packets from IP phones directs the REGISTER packets to all the call servers.

## Claims

1. A method of supporting Voice over Internet Protocol (VoIP) calls, said method being performed when atleast one VoIP terminal (101A-101N) in a network registers with a call server (104) by sending registration information to said call server through a local router (102), said method comprising of
said local router (102) sending said registration information to other call servers (105).

2. The method, as claimed in claim 1, wherein said VoIP terminal registers with said call server using REGISTER command.

3. The method, as claimed in claim 1, wherein said registration information comprises the address of said VoIP terminal as source address.

4. The method, as claimed in claim 1, wherein said other call servers (105) stores said registration information locally.

5. The method, as claimed in claim 1, wherein said other call servers act as backup servers for said call server.

6. A system for supporting Voice over Internet Protocol (VoIP) calls, said system comprising atleast one call server (104) and connected to atleast one network, wherein said call server permits atleast one VoIP phone (101A) to register with said call server (302), said system comprising atleast one means adapted for
forwarding (303) said registration information to other call servers.

7. The system, as claimed in claim 6, wherein said other call servers comprise atleast one means adapted for storing said registration information locally.

8. The system, as claimed in claim 6, wherein said other call servers comprise atleast one means adapted for acting as backup servers for said call server.
